# EUROPEAN PATENT SPECIFICATION

(11) **EP 0 564 214 B1**
(45) Date of publication and mention of the grant of the patent: **12.08.1998**
(21) Application number: 93302433.3
(22) Date of filing: 29.03.1993
(51) Int. Cl.: H04N 7/087

(54) **Digitally coded data display**
Zeigen von digital kodierten Daten
Affichage de données codées numériquement

(30) Priority: 02.04.1992 GB 9207262
(43) Date of publication of application: 06.10.1993
(73) Proprietor: TEXAS INSTRUMENTS INCORPORATED, Dallas Texas 75265 (US); TEXAS INSTRUMENTS LIMITED, Bedford MK41 7PA (GB)
(72) Inventor: Hinson, Colin R., Olney, Bedford, MK46 5HB (GB); Davies, Colin J., Blunham, Bedford MK44 3NW (GB); James, Simon B., Silsoe, Bedford MK45 4ES (GB)
(74) Representative: Abbott, David John

(56) References cited:
- EP-A- 0 343 740
- US-A- 5 012 338
- TELEVISION vol. 18, no. 5 , September 1980 , LONDON GB pages 43 - 45 J. P. CHAMBERS 'Potential of Extended Teletext.'
- IEEE TRANSACTIONS ON CONSUMER ELECTRONICS vol. CE-31, no. 4 , November 1985 , NEW YORK US pages 661 - 666 J. R. KINGHORN ET AL. 'Using Extensions to World System Teletext.'

## Description

The invention relates to the generation of displays from digitally coded data.

In information display systems of the kind known as teletext, digital data are transmitted on the lines of a television signal that are not used to produce the television picture and are decoded in a television receiver for display by the receiver when required in addition to or as an alternative to the television picture. The display of teletext data takes the form of twenty-four or twenty-five rows of characters, each row containing forty characters. The data are in the form of groups of bits, each group defining a character, which may be alphanumeric or graphical in nature. Typically the data carried by a television signal relate to a plurality of numbered pages containing different types of information and a viewer wishing to see one of the pages enters the corresponding page number into the decoding apparatus in the television receiver. The data page includes a header, packet 0, including the page number and the first row of the display and twenty-four other packets, numbered 1 to 24, containing the groups of bits representing the characters to be displayed in the remaining twenty-four rows of the page, the packets being allocated respectively to the rows of the display. The decoding apparatus examines the page numbers in the headers received and selects, decodes and stores the data for the required page and produces a display from the stored data.

Originally the teletext system was developed to provide displays in the English language and has since been extended to other languages. The English language as written or printed contains no accented characters but other languages use basically the same alphabet with some accented characters and yet other languages have extra or alternative characters. It is not possible to accommodate these accented characters and other characters within the character coding used for the basic character alphabet because the number of bits in a group of the existing teletext system does not provide enough combinations. It has been proposed therefore to transmit only those accented and other characters in one or more separate packets, known as packets 26, in which the individual characters have associated with them address information defining their locations on the display, with the result that the groups of bits representing those characters can be decoded separately from the basic characters in packets 0 to 24. For convenience, those accented and other characters are referred to from now on as packet 26 characters. The packets 26 for a page of data are transmitted immediately after the header (packet 0) and before the packets 1 to 24.

In a decoder for teletext data without packets 26, the data in packets 1 to 24 as they are received are decoded and used to overwrite the data in a page store from which is produced the display of the page contained therein (if any), so that the display is changed row by row to the new page. Hitherto, that data has been handled in the same way when the page includes packets 26 and the packet 26 data are stored elsewhere in the form that they are received, that is to say without being decoded, and, after the data in the following packets 1 to 24 have been stored in the page store and the corresponding display produced, the packet 26 data are decoded and the corresponding character data written in the page store at addresses corresponding to the display locations given in the packets 26 for those characters, overwriting what is already at those locations.

A similar teletext decoder is known from EP-A-0 343 740.

A disadvantage with decoding the packet 26 character data as described above and adding those characters to the display already derived from packets 1 to 24 of the page is that there is a noticeable delay before the packet 26 characters are added to the display so that it appears to flicker, the flicker being repeated each time the same page is received by the teletext decoder. Had the packet 26 characters been decoded and stored in the page store before the basic characters, the process of storing the basic characters would have resulted in the packet 26 characters being overwritten by whatever basic characters or other items had the same addresses in the page store.

It is an object of the present invention to enable characters from packets 26 to be incorporated in the display without the disadvantage described above.

According to the present invention there is provided apparatus responsive to received data for producing a display in the form of a plurality of rows of display elements, the received data including groups of bits, each group of bits representing a respective display element, the display elements belonging to a first set of standard display elements or to a second set of display elements additional to the first set, and the received data including groups of bits representing display elements belonging to the second set for selected ones of the element positions in the display which may precede groups of bits representing display elements belonging to the first set for all element positions in the display,
the apparatus including
decoding means responsive to a group of bits to produce a block of display data representing the corresponding element,
display means responsive to the display data from the decoding means for producing the displays,
a display memory having a plurality of addresses for storing respective groups of bits representing a display element and corresponding to the positions of elements in the lines of the display,
means for applying the groups of bits as they are received to be stored in the display memory, and
means for reading the groups of bits from the display memory and applying them to the decoding means in the order of displaying the elements in the rows of the display,
each address of the display memory including means for storing an additional bit, the additional bit being set when a group of bits representing a display element belonging to the second set is stored in the particular address, and the apparatus including means responsive to an additional bit when set to inhibit replacement of the stored group of bits by a subsequent group of bits representing a display element belonging to the first set in the same received data.

The display elements may be alphanumeric or graphics characters.

In an example of the apparatus for receiving and displaying data according to the World System Teletext, the data includes groups of eight bits, referred to as bytes, of which seven bits define a character, either alphanumeric or graphic, and the remaining bit is a parity check bit. The first set of standard characters may be the G0 set and the second set may be accents, characters and other symbols from the G2 set which are usable in conjunction with characters of the G0 set.

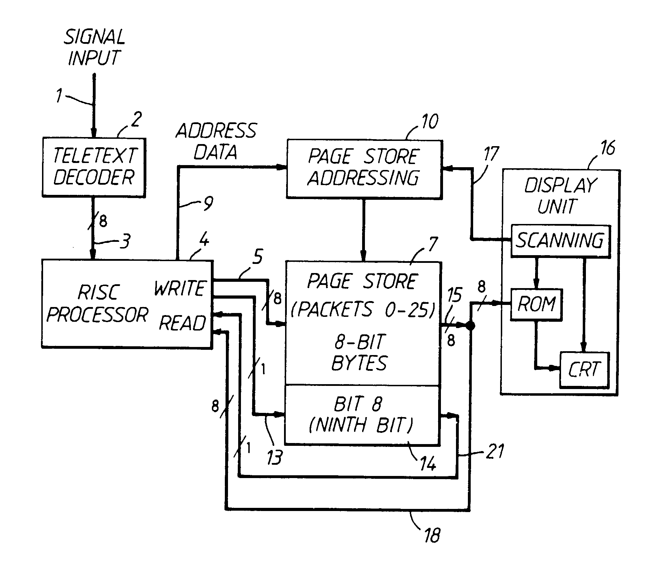

Apparatus for producing a display of information according to one example of the invention will now be described with reference to the single figure of the accompanying drawing which shows the apparatus in block diagram form.

The specification of the World System Teletext defines a page as consisting of 25 rows each of 40 characters. Each character is defined by 7 bits plus 1 parity bit, the parity bit being discarded after use, which provides the possibility of 128 different characters. Of the 128 characters, 32 are control characters and not displayed, leaving 96 visible characters. Those 96 characters form the "G0" set and provide most of the characters needed for Western European languages. Up to 13 characters outside the "G0" set can be provided by so-called "National Options" using control bits in packet 0 to redefine certain characters of the "G0" set.

Extension of the "G0" set and the ROM used to produce them on the display beyond 96 characters does involve the use of an extra bit, that is to 8 bits, for each character inside the apparatus. Having 8 bits for each character enables 128 extra characters to be included in the character set, and these extra characters can be accessed through packet 26 as mentioned above. The extra bit is a "0" for characters of the "G0" set and is a "1" for the extra characters, that is to say the packet 26 characters.

In the embodiment of the invention, an additional bit is added to the 8 bits, bit 0 to bit 7, allocated to each character in the display memory. The additional bit is used as a flag bit as described below.

The data are transmitted in packets, each containing 45 bytes. Packet 0, the first packet of a page to be transmitted, forms the header of the page and includes a number of control bits in addition to heading data for display. Following packet 0 any packets 26 in the page are transmitted and these are followed by packets 1 to 24, which provide the main part of the data to be displayed on the page. Each transmission of a page can include up to sixteen packets 26, so that if the number of packet 26 characters required in a page exceeds 208 (= 13x16), the number of characters that can be accommodated in sixteen packets 26, then the extra packet 26 characters are included in one or more further packets 26 forming part of one or more subsequent transmissions of the page. The subsequent transmissions of the page should not include packets 1 to 24 (unless they have been revised) because they would overwrite the packet 26 characters sent in the first transmission of the page.

In each of the packets 1 to 24, 40 of the bytes are allocated to the 40 characters to be displayed along the corresponding row, and the remaining 5 bytes provide control and check data.

In a packet 26, bytes 1 to 5 provide a clock run-in, a framing code and the row number 26, and byte 6 contains a designation code. The remaining 39 bytes are divided into 13 groups each of 3 bytes relating to a single packet 26 character, and within each group of 3 bytes 6 bits are allocated to display address, 5 bits to mode description, 7 bits to data and 6 bits to Hamming Code protection.

The 6 bits forming the display address represent either the column address, if it lies in the range 0-39, or the row address, if it lies in the range 40-63. In order to send the full display address of a character the row address is sent first and then the column address is sent together with the mode and data appropriate to the character position. For further display addresses in the same row only the column addresses are sent, it being assumed that they are in the same row as the previous address. For subsequent addresses in different rows, a further row address is sent to identify each row followed by the column address(es).

The mode description describes an accent or other modification to be applied to the character and the data defines the character itself to be displayed. The final 6 bits of the 3 byte group provide error detection and correction using Hamming codes.

Referring now to the single figure of the accompanying drawing, a teletext signal input from the television receiver is applied along a conductor 1 to a teletext decoder 2. The decoder 2, which may be of conventional construction, produces an output in the form of 8-bit parallel bytes which are fed along conductors 3 to a data processor 4. The processor 4, which must operate rapidly enough to process the incoming data as it is received, is preferably of the reduced instruction set type (RISC). The processed bytes are fed from the processor 4 along conductor 5 to a page store 7 containing at least one thousand bytes for each page to be stored. Address data derived from a packet 26 is conveyed along conductors 9 to page store addressing circuits 10 connected to address the page store 7. A flag bit, that is the same as the bit 7 of the output from the processor 4 along the conductors 5, is applied along a conductor 13 to an extra section 14 added to the page store 7 which provides storage for an additional bit for each of the bytes of the page store. The data stored in the page store 7, which constitutes the information to be displayed, is read out from that store along conductors 15 which feed 8 bits in parallel, as they are read, to a display unit 16. The display unit 16 includes a suitable read-only memory (ROM) for converting the incoming data into video information for controlling a raster scanned cathode-ray tube also included in the display unit. The scanning circuits of the display unit in addition to generating the raster on the cathode-ray tube supply signals to the ROM to read the video information therefrom and also, along a conductor 17 to the page store addressing circuits 10. The circuits 10 permit the reading from the page store 7 needed to generate the display to take place at the same time as the writing of new data into the page store.

The bytes output from the page store 7 along the conductors 15 are also fed along conductors 18 to the processor 4. Another input to the processor 4 is received from the extra section 14 of the page store 7 along a conductor 21.

In the operation of the apparatus shown in the figure, the teletext input from the television receiver is in serial form and the decoder 2 extracts from the input signal a clock run-in sequence and a framing code which are used to synchronise the timing of a clock and to synchronise the byte counter using a framing code detector in the decoder and accepts only data having the required page number. The teletext data is reformatted into 8 bit parallel form by the decoder 2 using the timing determined by the clock and the framing code detector. The processor 4 receives bytes from the decoder 2 in parallel and carries out the parity check on the basis of the parity check digit. After the parity check has been performed, the parity check bit, bit 7, is discarded. If the incoming signal includes one or more packets 26, the data from the or each packet 26 is received before packets 1 to 24 as described above and is indicated to the processor 4 by the row number 26 being included in the header of the packet. The processor then divides the packet into the characters and their addresses on the display. In order to indicate that a byte representing a character belongs to packet 26 and not to one of the packets 1 to 24, the processor 4 inserts a "1" as bit 7 of the byte so that when the byte is received by the display unit 16 it decodes it according to a part of the read-only memory as packet 26 character. The processor 4 also generates a "1" as a flag bit for each packet 26 character as it processes it. On the other hand, for bytes belonging to packets 1 to 24, the processor 4 inserts a "0" as the bit 7 of the byte so that a different part of the ROM in the display unit 16 is addressed when the byte is received; the flag bit for these characters is also "0".

For bytes in a packet 26 the data is stored in the page store 7 according to the address information derived from the packet by the processor 4 as described above. The processor 4 extracts first the row address from a three-byte group in the packet and stores that address. It then extracts the column address from the next three-byte group and applies the row and column addresses to the addressing circuits 10. At the same time the data from that three-byte group with a "1" added as bit 7 are output on the conductors 5 and are stored in the page store at the address determined by the row and column addresses. The flag bit, a "1", is stored as an additional bit at the same address but in the section 14 of the page store. Any further packet 26 character data are treated in the same way and stored in both sections 7 and 14 of the page store at the appropriate addresses.

After all of the packet 26 data has been received, and processed by the processor 4 and the packet 26 character information stored in the page store 7 with corresponding "1" in section 14, the display produced on the cathode-ray tube will include the packet 26 characters in their correct places in the rows of the display ready for the rest of the characters about to be received in packets 1 to 24.

As the packets 1 to 24 are being received, the processor 4 extracts the character data, performs the parity check, discards the parity bit and substitutes a "0" for it as bit 7. The addressing circuits 10 work through the addresses of the page store 7 systematically row by row as the character bytes are generated and output on the conductors 5, so that the character data are written sequentially at the correct addresses of the store 7 to produce the required display on the cathode-ray tube. The addressing circuits 10 are arranged to read the contents of an address before writing into it, with the result that when they reach an address in which a packet 26 character has just been stored, a "1" is output on the conductor 21 and travels back to the processor 4. That "1", a flag bit from the section 14 of the page store, causes the processor 4 to prevent the overwriting of the packet 26 character in the page store 7 by character data from packets 1 to 24.

When all of the packets 1 to 24 have been received and processed and the characters stored in the page store together with the characters from packets 26, all the flag bits stored in the section 14, which were "1", to indicate that the character bytes at those addresses are packet 26 characters for the current page and therefore not to be overwritten by any other characters received subsequently in the same transmission for the same page, are reset to "0". Once the transmission of the page is finished, it is necessary to reset the flag bits in the section 14 to "0" so as to permit overwriting of all addresses in the page store 7 when data for a new page or a fresh transmission of the same page are received. To that end, the circuits 10 are used by the processor 4 to read from and write into all the addresses of the page store 7 (or the relevant part of the page store if it contains more than one page). While that is proceeding data read from the page store 7 along conductors 15 is applied to the page store 7 along conductors 5 whilst maintaining a "0" on conductor 13. That process is performed for all addresses of the page store 7 with the result that the character bytes are retained complete with the "1" or "0" as bit 7 depending on whether they are packet 26 characters or packet 1 to 24 characters, but all of the flag bits in the section 14 are reset to "0".

If the number of packet 26 characters to be included in the page exceeds 208, that is the number of such characters that can be accommodated in a single transmission of the page (each packet 26 can include up to thirteen characters and each transmission of a page can include up to sixteen packets 26), then the extra packet 26 characters are sent in one or more subsequent transmissions of the page. The subsequent transmissions of the page do not include repetitions of packets 1 to 24, unless there is some revision of one or more of those packets since the first transmission, but consist of packet 0 and packets 26 only. The packet 26 characters in the subsequent transmissions of the page are placed at the addresses that accompany them, overwriting whatever characters is already at those addresses. Again the flag bits are sent to "1" as the packet 26 characters are entered into the page store, and reset to "0" when the particular transmission of the page is complete.

If a subsequent transmission of a page includes the packets 1 to 24, then at the end of the transmission only those packet 26 characters which were included in that particular transmission of the page will not have been overwritten, because the flag bits indicating the packet 26 characters of each previous transmission were reset to "0" at the end of the particular transmission. if any of the packet 26 characters that are wanted on the page are overwritten in that way, then they must be reinstated by a further transmission of the page with packets 1 to 24.

Although the invention has been described with reference to a specific example, it may be applied to the protection of individual parts of data generally where those parts are received in advance of other parts and are not to be overwritten by those other parts. A particular application for the invention is in video displays where an overlay is to be retained when a background display is altered.

## Claims

1. Apparatus responsive to received data for producing a display in the form of a plurality of rows of display elements, the received data including groups of bits, each group of bits representing a respective display element, the display elements belonging to a first set of standard display elements or to a second set of display elements additional to the first set, and the received data including groups of bits representing display elements belonging to the second set for selected ones of the element positions in the display which may precede groups of bits representing display elements belonging to the first set for all element positions in the display,
the apparatus including
decoding means responsive to a group of bits to produce a block of display data representing the corresponding element,
display means responsive to the display data from the decoding means for producing the displays,
a display memory having a plurality of addresses for storing respective groups of bits representing a display element and corresponding to the positions of elements in the lines of the display,
means for applying the groups of bits as they are received to be stored in the display memory, and
means for reading the groups of bits from the display memory and applying them to the decoding means in the order of displaying the elements in the rows of the display,
each address of the display memory including means for storing an additional bit, the additional bit being set when a group of bits representing a display element belonging to the second set is stored in the particular address, and the apparatus including means responsive to an additional bit when set to inhibit replacement of the stored group of bits by a subsequent group of bits representing a display element belonging to the first set in the same received data.

2. Apparatus according to claim 1 including means for adding an extra bit to each group of bits, the extra bit indicating whether the group of bits represents a display element belonging to the first set or to the second set, and means responsive to the extra bit to generate a signal representing the additional bit to enable the additional bit to be stored in the display memory at the same time as the associated group of bits.

3. Apparatus according to claim 2 wherein after all of the groups of bits representing display elements of both the first and the second sets that together produce a required display have been received and processed, each address of the display memory is read from, and the group of bits written back into the memory, means being provided to reset the additional bits previously recorded with groups of bits representing display elements of the second set.

4. Apparatus according to any one of the preceding claims wherein the display elements are alphanumeric or graphics characters.

5. Apparatus according to claim 4 wherein the received data constitutes a page of a teletext signal.

## Patentansprüche

1. Vorrichtung, die auf empfangene Daten anspricht, um eine Anzeige in Form mehrerer Zeilen von Anzeigeelementen zu erzeugen, wobei die empfangenen Daten Bitgruppen enthalten, von denen jede ein bestimmtes Anzeigeelement repräsentiert, die Anzeigeelemente zu einem ersten Satz von Standardanzeigeelementen oder zu einem zweiten Satz von Anzeigeelementen gehören, die den ersten Satz ergänzen, und die empfangenen Daten zu dem zweiten Satz gehörende Anzeigeelemente repräsentierende Bitgruppen für ausgewählte einzelne Elementpositionen enthalten, die zu dem ersten Satz gehörende Anzeigeelemente repräsentierenden Bitgruppen für alle Elementpositionen in der Anzeige vorausgehen können, mit
Dekodiermitteln, die auf eine Bitgruppe ansprechen, um einen Block von Anzeigedaten zu erzeugen, die das entsprechende Element repräsentieren,
Anzeigemitteln, die auf die Anzeigedaten von den Dekodiermitteln ansprechen, um die Anzeigen zu erzeugen,
einem Anzeigespeicher, der mehrere Adressen zum Speichern der jeweiligen Bitgruppen aufweist, die ein Anzeigeelement respräsentieren und den Positionen von Elementen in den Zeilen der Anzeige entsprechen,
Mitteln zum Zuführen der empfangenen Bitgruppen, um sie in dem Anzeigespeicher zu speichern, und
Mitteln zum Auslesen der Bitgruppen aus dem Anzeigespeicher und Zuführen der Bitgruppen zu dem Dekodiermittel in der Reihenfolge, in der die Elemente in den Zeilen der Anzeige angezeigt werden,
wobei jede Adresse des Anzeigespeichers Mittel zum Speichern eines zusätzlichen Bits umfaßt, das gesetzt wird, wenn eine Bitgruppe, die ein zu dem zweiten Satz gehörendes Anzeigeelement repräsentiert, unter der speziellen Adresse gespeichert wird, und die Vorrichtung Mittel umfaßt, die auf ein zusätzliches Bit ansprechen, wenn dieses gesetzt ist, so daß das Ersetzen der gespeicherten Bitgruppe durch eine nachfolgende Bitgruppe, die ein zu dem ersten Satz gehörendes Anzeigelement repräsentiert, bei den gleichen empfangenen Daten verhindert wird.

2. Vorrichtung nach Anspruch 1 mit Mitteln zur Hinzufügung eines zusätzlichen Bits zu jeder Bitgruppe, wobei das zusätzliche Bit anzeigt, ob die Bitgruppe ein zu dem ersten Satz oder ein zu dem zweiten Satz gehörendes Anzeigeelement repräsentiert, und Mitteln, die auf das zusätzliche Bit ansprechen, um ein Signal zu erzeugen, das das zusätzliche Bit repräsentiert, um es zu ermöglichen, daß das zusätzliche Bit gleichzeitig mit der zugehörigen Bitgruppe in dem Anzeigespeicher gespeichert wird.

3. Vorrichtung nach Anspruch 2, bei der dann, wenn sämtliche Bitgruppen, die Anzeigelemente sowohl des ersten als auch des zweiten Satzes, die zusammen eine gewünschte Anzeige erzeugen, repräsentieren, empfangen und verarbeitet worden sind, jede Adresse des Anzeigespeichers aus dem Speicher gelesen und die Bitgruppe in den Speicher zurückgeschrieben wird, wobei Mittel vorgesehen sind, die die zusätzlichen Bits zurückzusetzen, mit denen vorher die die Anzeigeelemente des zweiten Satzes repräsentierenden Bitgruppen registriert wurden.

4. Vorrichtung nach einem der vorhergehenden Ansprüche, bei der die Anzeigeelemente aus alphanumerischen Zeichen oder aus Graphikzeichen bestehen.

5. Vorrichtung nach Anspruch 4, bei der die empfangenen Daten die Seite eines Videotextsignals bilden.

## Revendications

1. Appareil répondant à des données reçues pour produire un affichage sous la forme d'une pluralité de rangées d'éléments d'affichage, les données reçues comprenant des groupes de bits, chaque groupe de bits représentant un élément correspondant d'affichage, les éléments d'affichage appartenant à un premier ensemble d'éléments standard d'affichage ou à un deuxième ensemble d'éléments d'affichage en plus du premier ensemble, et les données reçues comprenant des groupes de bits représentant des éléments d'affichage appartenant aux deuxième ensemble pour des positions sélectionnées parmi les positions d'élément dans l'affichage qui peuvent précéder des groupes de bits représentant des éléments d'affichage appartenant au premier ensemble pour toutes les positions d'élément dans l'affichage,
l'appareil comprenant
des moyens de décodage répondant à un groupe de bits pour produire un bloc de données d'affichage représentant l'élément correspondant,
des moyens d'affichage répondant aux données d'affichage provenant des moyens de décodage pour produire les affichages,
une mémoire d'affichage ayant une pluralité d'adresses pour stocker des groupes correspondants de bits représentant un élément d'affichage et correspondant aux positions d'éléments dans les lignes de l'affichage,
des moyens pour appliquer les groupes de bits tels qu'ils sont reçus pour qu'ils soient stockés dans la mémoire d'affichage, et
des moyens pour lire les groupes de bits dans la mémoire d'affichage et les appliquer aux moyens de décodage dans l'ordre d'affichage des éléments dans les rangées de l'affichage,
chaque adresse de la mémoire d'affichage comprenant des moyens pour stocker un bit supplémentaire, le bit supplémentaire étant activé quand un groupe de bits représentant un élément d'affichage appartenant au deuxième ensemble est stocké à l'adresse particulière, et l'appareil comprenant des moyens répondant à un bit supplémentaire quand celui-ci est activé pour empêcher un remplacement du groupe stocké de bits par un groupe ultérieur de bits représentant un élément d'affichage appartenant au premier ensemble dans les mêmes données reçues.

2. Appareil selon la revendication 1, comprenant des moyens pour ajouter un bit supplémentaire à chaque groupe de bits, le bit supplémentaire indiquant si le groupe de bits représente un élément d'affichage appartenant au premier ensemble ou au deuxième ensemble, et des moyens répondant au bit supplémentaire pour produire un signal représentant le bit supplémentaire afin de permettre au bit supplémentaire d'être stocké dans la mémoire d'affichage en même temps que le groupe associé de bits.

3. Appareil selon la revendication 2, dans lequel après que tous les groupes de bits représentant des éléments à la fois des premier et deuxième ensembles qui produisent ensemble un affichage souhaité ont été reçus et traités, chaque adresse de la mémoire d'affichage est lue, et le groupe de bits est réécrit dans la mémoire, des moyens étant prévus pour réinitialiser les bits enregistrés précédemment avec des groupes de bits représentant des éléments d'affichage du deuxième ensemble.

4. Appareil selon l'une quelconque des revendications précédentes, dans lequel les éléments d'affichage sont des caractères alphanumériques ou graphiques.

5. Appareil selon la revendication 4, dans lequel les données reçues constituent une page de signal de télétexte.
